# EUROPEAN PATENT SPECIFICATION

(11) **EP 2 717 484 B1**
(45) Date of publication and mention of the grant of the patent: **21.02.2018**
(21) Application number: 11866079.4
(22) Date of filing: 27.10.2011
(51) Int. Cl.: H04J 14/02, H04Q 11/00, H04B 3/06

(54) **METHOD AND SYSTEM FOR IMPLEMENTING OPTICAL LABEL**
VERFAHREN UND SYSTEM ZUR IMPLEMENTIERUNG EINES OPTISCHEN ETIKETTS
PROCÉDÉ ET SYSTÈME POUR LA MISE EN OEUVRE D'UNE ÉTIQUETTE OPTIQUE

(30) Priority: 23.05.2011 CN 201110136893
(43) Date of publication of application: 09.04.2014
(73) Proprietor: ZTE Corporation, Shenzhen, Guangdong 518057 (CN)
(72) Inventor: SHANG, Yingchun, Shenzhen Guangdong 518057 (CN); HUA, Feng, Shenzhen Guangdong 518057 (CN); CHEN, Xun, Shenzhen Guangdong 518057 (CN); YU, Jin, Shenzhen Guangdong 518057 (CN)
(74) Representative: Lavoix
(86) International application number: PCT/CN2011/081394
(87) International publication number: WO 2012/159417

(56) References cited:
- WO-A1-2007/138477
- CN-A- 1 592 302
- CN-A- 101 453 673
- CN-A- 102 195 739
- US-A1- 2004 062 548
- US-A1- 2008 013 950
- US-A1- 2009 226 172
- US-B2- 7 031 606
- GHANI N ET AL: "Control plane design in multidomain/multilayer optical networks", IEEE COMMUNICATIONS MAGAZINE, IEEE SERVICE CENTER, PISCATAWAY, US, vol. 46, no. 6, 1 June 2008 (2008-06-01), pages 78-87, XP011227789, ISSN: 0163-6804, DOI: 10.1109/MCOM.2008.4539470
- CHUN-KIT CHAN ET AL: "Realization of a Time-Slot Access WDMA Dual Bus/Ring Packet Network Node Using Centralized Light Sources", IEEE PHOTONICS TECHNOLOGY LETTERS, IEEE SERVICE CENTER, PISCATAWAY, NJ, US, vol. 9, no. 12, 1 December 1997 (1997-12-01), XP011048985, ISSN: 1041-1135

## Description

### TECHNICAL FIELD

The disclosure relates to an optical communication network, and in particular to a method and system for implementing an optical label.

### BACKGROUND

With the development of Wavelength Division Multiplex (WDM), in an existing optical communication network, multiple optical signals or optical channels with different wavelengths can be transmitted simultaneously in the same optical fibre, and technology based on a Reconfigurable Optical Add-Drop Multiplexer (ROADM) facilitates configuration of each carrier or optical channel as demanded in optical communication, such that a carrier in an optical network does not always go through a same path between two sites, and a certain carrier is not always allocated to the same two sites.

In order to perform network topology identification and optical channel detection, a low-frequency label signal or tone signal may be superposed on a carrier in the optical network, the label signal in an optical channel may be identified on various nodes in the network, and a transmitting path of the carrier in the network and relevant information on the carrier may be obtained by demodulating label signal information (i.e., information carried by the label signal). A label signal may be loaded by using an electrical variable optical attenuator, an optical transmitter with low-speed modulation, a high-speed data modulator with low-speed modulation (such as an MZ modulator), or the like. The label signal information may be demodulated by finding each frequency of label signal on the optical carrier through a Fast Fourier Transform (FFT) algorithm and then demodulating the label signal information.

At present, a label signal is loaded by being modulated onto a carrier by Frequency-Shift Keying (FSK). Amplitude-Shift Keying (ASK), or the like, and is demodulated by detecting a frequency of label signal and label signal information on the carrier through the FFT algorithm, for example, at a receiving end. When the label signal is modulated, one carrier corresponds in general to one or more different frequencies of label signal. Thus, when there are a large number of carriers in the optical network, a large number of frequencies of label signal are required which poses a disadvantage in label signal demodulation and label signal information identification at the receiving end.

According to GHANI N ET AL: "Control plane design in multidomain/multilayer optical networks", IEEE COMMUNICATIONS MAGAZINE, IEEE SERVICE CENTER, PISCATAWAY, US, vol. 46, no. 6, 1 June 2008, pages 78-87, ISSN: 0163-6804, DOI: 10.1109/MCOM. 2008.4539470, a control plane design for multi-domain optical networks is disclosed.

According to CHUN-KIT CHAN ET AL: "Realization of a Time-Slot Access WDMA Dual Bus/Ring Packet Network Node Using Centralized Light Sources", IEEE PHOTONICS TECHNOLOGY LETTERS, IEEE SERVICE CENTER, PISCATAWAY, NJ, US, vol. 9, no. 12, 1 December 1997, ISSN: 1041-1135, a practical network node in a time-division slot access wavelength-division multiaccess (WDMA) bus/ring packet network using centralized light sources is proposed. The head node generates all the wavelength channels. The transmitting node senses the occupancy of the channel by simply detecting the presence of a 1-GHz RF tone, which can be commonly used by all nodes in the network.

According to US 2004/062548 A1, a method and system are disclosed for identification of a channel in an optical network. The channel is identified by the use of unique combinations of two or more low frequencies, or tones, modulated onto the channel and optionally, a network parameter associated with the channel.

### SUMMARY

In view of this, it is desired that the disclosure provides a method and system for implementing an optical label, capable of overcoming the disadvantage in label signal demodulation and label signal information identification at the receiving end due to use of a large number of frequencies of label signal.

The features of the method and system according to the present disclosure are defined in the independent claims, and the preferable features according to the present invention are defined in the dependent claims.

With the method and system for implementing an optical label according to the disclosure, an optical network is domain-partitioned, and one or more frequencies of label signal are allocated for each domain; in each domain, an allocated frequency of label signal is circulated among ROADM nodes and/or among carriers within an ROADM node according to a preset time-division rule; a label signal is sent on a carrier using a circulated frequency of label signal, such that sharing of a frequency of label signal on multiple carriers according to a circulating sequence is implemented, and thus label-signal transmission may be implemented on more carriers with less frequencies of label signal, thereby not only reducing demand of the system for the number of label frequencies, but also facilitate label-signal extraction.

### BRIEF DESCRIPTION OF THE DRAWINGS

Fig.1 shows a flow chart of a method for implementing an optical label;
Fig.2 shows a schematic diagram of domain-partition of an optical network; and
Fig.3 shows a schematic diagram of a structure of an ROADM node.

### DETAILED DESCRIPTION

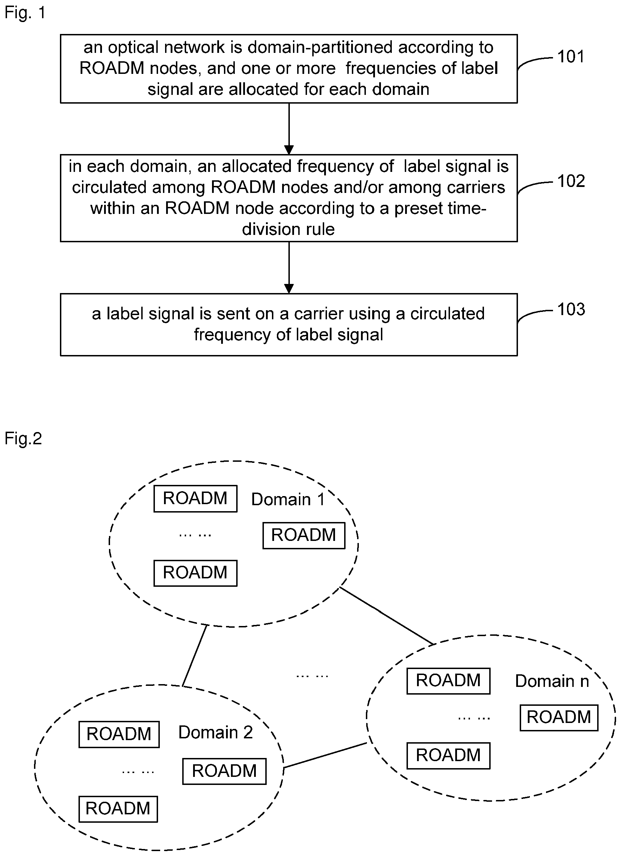

According to various embodiments of the disclosure, with a method for implementing an optical label according to the disclosure, a frequency of label signal is used in turn on multiple carriers in an optical network by way of time-division, so as to transmit relevant information of the present carrier. As shown in Fig.1, the method includes the following steps.
step 101: an optical network is domain-partitioned according to ROADM nodes, and one or more frequencies of label signal are allocated for each domain;
step 102: in each domain, an allocated frequency of label signal is circulated among ROADM nodes and/or among carriers within an ROADM node according to a preset time-division rule;
step 103: a label signal is sent on a carrier using a circulated frequency of label signal.

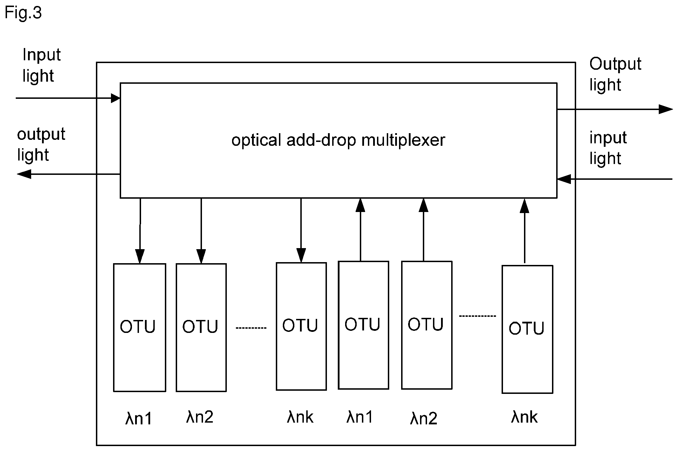

A solution of the disclosure will be illustrated with reference to Fig.2 and Fig.3.

As shown in Fig.2, the optical network is domain-partitioned according to ROADM nodes for example base on an IP address of an ROADM node, a distance between two ROADM nodes, or a number of add and drop carriers included in an ROADM nodes; each domain includes one or more ROADM nodes; each ROADM node includes one or more carriers. Assume that one or more frequencies of label signal are allocated for each domain, then multiple carriers in one domain share the allocated one or more frequencies of label signal in turn by way of time-division. By time-division, it means that one frequency of label signal may be used by just one carrier of one ROADM node at a time.

Shown in Fig.3 is one ROADM node, including one optical add-drop multiplexer, connection of input and output light in two directions, and k add and drop OTU connections. Wherein, each add and drop OTU connection corresponds to one carrier, respectively, then this ROADM node totally contains k carriers of wavelengths λn1∼λnk, respectively, wherein n denotes a serial number of this ROADM node in the domain where this ROADM node is located.

In each domain, a certain frequency of label signal is circulated among ROADM nodes and/or among carriers within an ROADM node according to a preset time-division rule.

The time-division rule includes a time-division circulating sequence and a time-division circulating mode.

The time-division circulating sequence includes:
1. a time-division circulating sequence among ROADM nodes,
   wherein specifically, the time-division circulating sequence among ROADM nodes may be set according to the serial number of an ROADM node in a domain, according to the number of carriers included in an ROADM node, or according to the IP address of an ROADM node, etc.; of course, other ways may be set as needed as long as the time-division circulating sequence among the ROADM nodes is provided; and
2. a time-division circulating sequence among carriers within an ROADM node,
   wherein specifically, the time-division circulating sequence among carriers within an ROADM node may be set according to the wavelength of a carrier, according to the service type corresponding to a carrier, or according to the serial number of a carrier; of course, other ways may be set as needed as long as the time-division circulating sequence among the carriers is provided.

The time-division circulating mode includes:
mode 1, a token circulating mode, wherein for example a token corresponding to a frequency of label signal is circulated among the ROADM nodes and/or among carriers within an ROADM node via information inserted in an Optical Supervisory Channel (OSC), a label channel, a data channel, or via intra-node management;
in which case, the label signal is sent on a carrier using the frequency of label signal corresponding to the token after the token is circulated to the carrier; after the label signal is sent, the frequency of label signal is released from the carrier, and the token is circulated to a next carrier in the time-division circulating sequence; if the carrier is the last one in the present ROADM node, then the present ROADM node releases the frequency of label signal, by sending the token to a next ROADM node in the time-division circulating sequence; when receiving the token, an ROADM node circulates the token to the first carrier in the ROADM according to the time-division circulating sequence among carriers; and
mode 2, a time slice circulating mode, wherein specifically, one fixed time slice, i.e, one fixed period of time is allocated for each carrier within each ROADM node in a domain, and the label signal is sent on a carrier using a circulated frequency of label signal in a fixed time slice for the carrier.

In this case, the label signal is sent on a present carrier using the frequency of label signal in the fixed time slice corresponding to the present carrier, when the fixed time slice for the present carrier expires, the frequency of label signal is released from the present carrier, and is used to send a label signal on a next carrier in the fixed time slice corresponding to the next carrier according to the time-division circulating sequence among carriers; if the present carrier is the last one in a present ROADM node, then the present ROADM node releases this frequency of label signal; and according to the time-division circulating sequence among the ROADM nodes, a next ROADM node sends a label signal on a first carrier in the next ROADM node using this frequency of label signal in the fixed time slice of this first carrier according to the time-division circulating sequence among the carriers included in this next ROADM node.

Moreover, the same time-division circulating mode may be adopted among ROADM nodes and among carriers; or different time-division circulating modes may be adopted among ROADM nodes and among carriers, as well.

Note that the circulating of the frequency of label signal among carriers is controlled by the ROADM node to which the carriers belong or by an upper management unit of the domain; the circulating of the frequency of label signal among ROADM nodes is controlled by the upper management unit of the domain.

Wherein, the label signal information sent on a carrier includes at least one of the following: information of the present carrier, a sending ROADM node and a domain where the sending ROADM node is located, and a destination ROADM node, etc.

Specifically, a label signal to be sent is obtained by superposing a modulated low frequency sinusoidal signal with a small amplitude on a label signal carrier with the frequency of label signal.

In this way, label-signal transmission may be implemented on more carriers with less frequencies of label signal, thereby not only reducing demand of the system for the number of label frequencies, but also facilitate label-signal extraction.

The solution of the disclosure will be illustrated below with reference to specific embodiments.

Assume that the optical network is partitioned into three domains and one domain therein is taken as an example. Assume that two frequencies of label signal, denoted F1 and F2, are allocated for the domain; this domain includes three ROADM nodes with serial numbers 1, 2, and 3, respectively; the carriers of the ROADM node 1 are: λ11∼λ14; the carriers of the ROADM node 2 is: λ21; the carriers of the ROADM node 3 are: λ31∼λ34.

A time-division rule for circulating frequency of label signal F1 is set, including:
a time-division circulating sequence among ROADM nodes of ROADM node 1→ROADM node 2 according to the serial number of an ROADM node; and among carriers of ROADM node 1 of λ11→λ12→λ13→ λ14 according to the serial number of a carrier, wherein no time-division circulating sequence among carriers needs to be set for ROADM node 2 as the ROADM node 2 only includes one carrier λ21; and
a time-division circulating mode to circulate F1 among ROADM nodes and among carriers by circulating a token.

A time-division rule for circulating frequency of label signal F2 is set, including:
a time-division circulating sequence which provides that the F2 is used only by ROADM node 3, in which case it is not necessary to set any time-division circulating sequence among ROADM nodes; wherein the time-division circulating sequence among carriers in ROADM node 3 is set as λ34→λ32→λ31→λ33 according to the wavelength of a carrier; and
a time-division circulating mode to circulate F2 among the carriers in the time slice mode, in which case it is required to allocate in advance one fixed time slice for λ31∼λ34, respectively.

So, frequencies of label signal F1 and F2 are used by time-division in the domain as follows:
for the frequency of label signal F1, an upper management unit of the domain allocates the F1 to the ROADM node 1 at some point, and sends the token corresponding to F1 to the ROADM node 1; according to an order of λ11→λ12→λ13→λ14, ROADM node 1 first circulates the token to the carrier λ11, on which the label signal is now sent using F1, which is then released from carrier λ11 and passed on by circulating the token in an order of λ11→λ12→λ13→λ14; after a label signal is sent on carrier λ14, ROADM node 1 releases F1 by circulating the token to ROADM node 2, which circulates the token to carrier λ21, then ROADM node 2 releases the F1 after a label signal is sent. After that, the upper management unit reallocates the F1 to ROADM node 1 at some point as is set and this process repeats.
for the frequency of label signal F2, the upper management unit of the domain allocates the F2 to ROADM node 3 at some point; the ROADM node 3 may control to send a label signal using F2 on λ34→λ32→λ31→λ33 in their respective fixed time slices in the order of λ34→λ32→λ31→λ33, the F2 will be released for further use by a next carrier as long as a time slice for a present carrier expires regardless of whether the process of sending a label signal on the present carrier is completed or not.

To implement the method mentioned above, the disclosure further provides a system for implementing an optical label, including:
a setting module configured to domain-partition an optical network according to Reconfigurable Optical Add-Drop Multiplexer (ROADM) nodes, and to allocate one or more frequencies of label signal for each domain;
a circulating module configured to circulate, in each domain, an allocated frequency of label signal among ROADM nodes and/or among carriers within an ROADM node according to a preset time-division rule;
a sending module configured to send a label signal on a carrier using a circulated frequency of label signal.

In some embodiments, the time-division rule includes a time-division circulating sequence and a time-division circulating mode.

The time-division circulating sequence includes a time-division circulating sequence among the ROADM nodes and/or a time-division circulating sequence among carriers within an ROADM node.

The time-division circulating mode includes a token circulating mode and/or a time slice circulating mode.

The circulating module is further configured to circulate, when adopting the token circulating mode, a token corresponding to a frequency of label signal among the ROADM nodes and/or among carriers within an ROADM node via information inserted in an Optical Supervisory Channel (OSC), or a label channel, or a data channel, or via intra-node management; and
accordingly, the sending module is further configured to send the label signal on a carrier using the frequency of label signal corresponding to the token after the token is circulated to the carrier.

The circulating module is further configured to allocate, when adopting the time slice circulating mode, one fixed time slice for each carrier within each ROADM node in a domain; and
accordingly, the sending module is further configured to send the label signal on a carrier using a circulated frequency of label signal in a fixed time slice for the carrier.

What described are merely preferred embodiments of the disclosure, and are not intended to limit the scope of the disclosure.

## Claims

1. A method for implementing an optical label, the method comprising the steps of:
domain-partitioning an optical network according to Reconfigurable Optical Add-Drop Multiplexer ROADM nodes, and allocating one or more label signal frequencies for each domain (101);
in each domain sharing an allocated label signal frequency among ROADM nodes and/or among carriers within an ROADM node according to a preset time-division rule (102);
sending a label signal on a carrier using a shared label signal frequency (103),
wherein by the step of domain-partitioning an optical network according to ROADM nodes, the optical network is partitioned into multiple domains each of the multiple domains comprising one or more ROADM nodes, each of the one or more ROADM nodes comprising one or more carriers, each of the one or more carriers being of a wavelength,
wherein by the step of allocating one or more label signal frequencies for each domain and by the step of in each domain sharing an allocated label signal frequency among ROADM nodes and/or among carriers within an ROADM node according to a preset time-division rule, the one or more label signal frequencies are allocated for carrier labelling in each domain and are shared in turn by the one or more carriers in the each domain; and wherein the preset time-division rule ensures that one label signal frequency is used to label just one carrier of one ROADM node at a time.

2. The method according to claim 1, wherein the preset time-division rule includes a time-division sharing sequence and a time-division sharing mode,
wherein the time-division sharing sequence includes a time-division sharing sequence among the ROADM nodes and/or a time-division sharing sequence among carriers within an ROADM node,
wherein the time-division sharing mode includes a token sharing mode and/or a time slice sharing mode,
wherein the token sharing mode includes: sharing a token corresponding to a label signal frequency among the ROADM nodes and /or among carriers within an ROADM node via information inserted in an Optical Supervisory Channel, OSC, a label channel, a data channel, or via intra-node management; and sending the label signal on a carrier using the label signal frequency corresponding to the token after the token is shared to the carrier,
wherein the time slice sharing mode includes: allocating one fixed period of time for each carrier within each ROADM node in a domain, and sending the label signal on a carrier using a shared label signal frequency in a fixed period of time allocated for the carrier.

3. The method according to any one of claim 1 to claim 2, wherein information carried by the label signal includes at least one of the following: information of the present carrier, a sending ROADM node and a domain where the sending ROADM node is located, and a destination ROADM node.

4. A system for implementing an optical label, wherein the system comprises:
a setting module configured to domain-partition an optical network according to Reconfigurable Optical Add-Drop Multiplexer ROADM nodes, and to allocate one or more label signal frequencies for each domain; a sharing module configured to share, in each domain an allocated label signal frequency among ROADM nodes and/or among carriers within an ROADM node according to a preset time-division rule; and
a sending module configured to send a label signal on a carrier using a shared label signal 15 frequency,
wherein the optical network is partitioned into multiple domains, each of the multiple domains comprising one or more ROADM nodes, each of the one or more ROADM nodes comprising one or more carriers, each of the one or more carriers being of a wavelength,
wherein one or more label signal frequencies are allocated for carrier labelling in each domain by being shared in turn by the one or more carriers in the each domain; and wherein the preset time-division rule ensures that one label signal frequency is used to label just one carrier of one ROADM node at a time.

5. The system according to claim 4, wherein the preset time-division rule comprises a time-division sharing sequence and a time-division sharing mode,
wherein the time-division sharing sequence comprises a time-division sharing sequence among the ROADM nodes and/or a time-division sharing sequence among carriers within an ROADM node,
wherein the time-division sharing mode comprises a token sharing mode and/or a time slice sharing mode,
wherein the sharing module is configured to share, when adopting the token sharing mode, a token corresponding to a label signal frequency among the ROADM nodes and/or among carriers within an ROADM node via information inserted in an Optical Supervisory Channel, OSC, or a label channel, or a data channel, or via intra-node management; and the sending module is configured to send the label signal on a carrier using the label signal frequency corresponding to the token after the token is shared to the carrier,
wherein the sharing module is configured to allocate, when adopting the time slice sharing mode, one fixed period of time for each carrier within each ROADM node in a domain; and the sending module is configured to send the label signal on a carrier using a shared label signal frequency in a fixed period of time for the carrier.

## Patentansprüche

1. Verfahren zur Implementierung eines optischen Etiketts, wobei das Verfahren die folgenden Schritte umfasst:
Domänenpartitionieren eines optischen Netzwerks gemäß ROADM (rekonfigurierbarer optischer Add/Drop-Multiplexer)-Knoten und Zuweisen einer oder mehrerer Etikettsignalfrequenzen für jede Domäne (101);
Freigeben einer zugewiesenen Etikettsignalfrequenz in jeder Domäne unter ROADM-Knoten und/oder unter Trägern innerhalb eines ROADM-Knotens gemäß einer voreingestellten Zeitmultiplexregel (102);
Senden eines Etikettsignals auf einem Träger unter Verwendung einer freigegebenen Etikettsignalfrequenz (103),
wobei das optische Netzwerk durch den Schritt des Domänenpartitionierens eines optischen Netzwerks gemäß ROADM-Knoten in mehrere Domänen partitioniert wird, wobei jede der mehreren Domänen einen oder mehrere ROADM-Knoten umfasst, jeder des einen oder der mehreren ROADM-Knoten einen oder mehrere Träger umfasst, und jeder des einen oder der mehreren Träger eine Wellenlänge aufweist,
wobei die eine oder die mehreren Etikettsignalfrequenzen durch den Schritt des Zuweisens einer oder mehrerer Etikettsignalfrequenzen für jede Domäne und durch den Schritt des Freigebens einer zugewiesenen Etikettsignalfrequenz unter ROADM-Knoten und/oder unter Trägern innerhalb eines ROADM-Knotens gemäß einer voreingestellten Zeitmultiplexregel zur Trägeretikettierung in jeder Domäne zugewiesen und durch den einen oder die mehreren Träger wiederum in jeder Domäne gemeinsam genutzt werden; und wobei
die voreingestellte Zeitmultiplexregel gewährleistet, dass eine Etikettsignalfrequenz zum Etikettieren nur jeweils eines Trägers eines ROADM-Knotens verwendet wird.

2. Verfahren nach Anspruch 1, wobei die voreingestellte Zeitmultilexregel eine Zeitmultiplex-Freigabefolge und einen Zeitmultiplex-Freigabemodus umfasst,
wobei die Zeitmultiplex-Freigabefolge eine Zeitmultiplex-Freigabefolge unter den ROADM-Knoten und/oder eine Zeitmultiplex-Freigabefolge unter Trägern innerhalb eines ROADM-Knotens umfasst,
wobei der Zeitmultiplex-Freigabemodus einen Token-Freigabemodus und/oder einen Zeitschlitz-Freigabemodus umfasst,
wobei der Token-Freigabemodus umfasst: Freigeben eines Tokens, der einer Etikettsignalfrequenz entspricht, untern den ROADM-Knoten und/oder unter Trägern innerhalb eines ROADM-Knotens durch Informationen, die in einen optischen Überwachungskanal, OSC, einen Etikettkanal, einen Datenkanal eingefügt sind, oder durch knoteninterne Verwaltung und Senden des Etikettsignals auf einem Träger unter Verwendung der Etikettsignalfrequenz, die dem Token entspricht, nach der Freigabe des Tokens für den Träger,
wobei der Zeitschlitz-Freigabemodus umfasst: Zuweisen eines festen Zeitraums für jeden Träger innerhalb eines jeden ROADM-Knotens in einer Domäne und Senden des Etikettsignals auf einem Träger unter Verwendung einer freigegebenen Etikettsignalfrequenz in einem festen Zeitraum, der für den Träger zugewiesen ist.

3. Verfahren nach einem der Ansprüche 1 bis 2, wobei Informationen, die vom Etikettsignal befördert werden, mindestens eine von Folgenden umfassen: Informationen des gegenwärtigen Trägers, eines sendenden ROADM-Knotens und einer Domäne, in welcher sich der sendende ROADM-Knoten befindet, und eines ROADM-Zielknotens.

4. System zum Implementieren eines optischen Etiketts, wobei das System umfasst:
ein Einstellmodul, das zum Domänenpartitionieren eines optischen Netzwerks gemäß ROADM (rekonfigurierbarer optischer Add/Drop-Multiplexer)-Knoten und Zuweisen einer oder mehrerer Etikettsignalfrequenzen für jede Domäne konfiguriert ist;
eine Freigabemodul, das zum Freigeben einer zugewiesenen Etikettsignalfrequenz unter ROADM-Knoten und/oder unter Trägern innerhalb eines ROADM-Knotens gemäß einer voreingestellten Zeitmultiplexregel in jeder Domäne konfiguriert ist;
ein Sendemodul, das zum Senden eines Etikettsignals auf einem Träger unter Verwendung einer freigegebenen Etikettsignalfrequenz konfiguriert ist,
wobei das optische Netzwerk in mehrere Domänen partitioniert wird, wobei jede der mehreren Domänen einen oder mehrere ROADM-Knoten umfasst, jeder des einen oder der mehreren ROADM-Knoten einen oder mehrere Träger umfasst, und jeder des einen oder der mehreren Träger eine Wellenlänge aufweist,
wobei eine oder mehrere Etikettsignalfrequenzen zur Trägeretikettierung in jeder Domäne zugewiesen und durch den einen oder die mehreren Träger wiederum in jeder Domäne gemeinsam genutzt werden; und wobei
die voreingestellte Zeitmultiplexregel gewährleistet, dass eine Etikettsignalfrequenz zum Etikettieren nur jeweils eines Trägers eines ROADM-Knotens verwendet wird.

5. System nach Anspruch 4, wobei die voreingestellte Zeitmultilexregel eine Zeitmultiplex-Freigabefolge und einen Zeitmultiplex-Freigabemodus umfasst,
wobei die Zeitmultiplex-Freigabefolge eine Zeitmultiplex-Freigabefolge unter den ROADM-Knoten und/oder eine Zeitmultiplex-Freigabefolge unter Trägern innerhalb eines ROADM-Knotens umfasst,
wobei der Zeitmultiplex-Freigabemodus einen Token-Freigabemodus und/oder einen Zeitschlitz-Freigabemodus umfasst,
wobei das Freigabemodul so konfiguriert ist, dass es bei Anwenden des Token-Freigabemodus einen Token, der einer Etikettsignalfrequenz entspricht, unter den ROADM-Knoten und/oder unter Trägern innerhalb eines ROADM-Knotens durch Informationen, die in einen optischen Überwachungskanal, OSC, einen Etikettkanal, einen Datenkanal eingefügt sind, oder durch knoteninterne Verwaltung freigibt; und
das Sendemodul so konfiguriert ist, dass es das Etikettsignal auf einem Träger unter Verwendung der Etikettsignalfrequenz, die dem Token entspricht, nach der Freigabe des Tokens für den Träger sendet,
wobei das Freigabemodul so konfiguriert ist, dass bei Anwenden des Zeitschlitz-Freigabemodus einen festen Zeitraum für jeden Träger innerhalb eines jeden ROAM-Knotens in einer Domäne zuweist, und das Sendemodul so konfiguriert ist, dass es das Etikettsignal auf einem Träger unter Verwendung einer freigegebenen Etikettsignalfrequenz in einem festen Zeitraum für den Träger sendet.

## Revendications

1. Procédé de mise en oeuvre d'une étiquette optique, le procédé comportant les étapes ci-dessous consistant à :
partitionner en domaines un réseau optique selon des noeuds de multiplexeur à insertion-extraction optique reconfigurable, ROADM, et affecter une ou plusieurs fréquences de signaux d'étiquettes pour chaque domaine (101) ;
dans chaque domaine, partager une fréquence de signal d'étiquette affectée, parmi des noeuds de multiplexeur ROADM, et/ou parmi des porteuses au sein d'un noeud de multiplexeur ROADM, selon une règle de répartition dans le temps prédéfinie (102) ;
envoyer un signal d'étiquette sur une porteuse en utilisant une fréquence de signal d'étiquette partagée (103) ;
dans lequel, par l'étape de partitionnement en domaines d'un réseau optique selon des noeuds de multiplexeur ROADM, le réseau optique est partitionné en de multiples domaines, chacun des multiples domaines comportant un ou plusieurs noeuds de multiplexeur ROADM, chacun dudit un ou desdits plusieurs noeuds de multiplexeur ROADM comportant une ou plusieurs porteuses, chacune de ladite une ou desdites plusieurs porteuses présentant une longueur d'onde,
dans lequel, par l'étape d'affectation d'une ou plusieurs fréquences de signaux d'étiquettes pour chaque domaine, et par l'étape, dans chaque domaine, de partage d'une fréquence de signal d'étiquette affectée, parmi des noeuds de multiplexeur ROADM, et/ou parmi des porteuses au sein d'un noeud de multiplexeur ROADM, selon une règle de répartition dans le temps prédéfinie, ladite une ou lesdites plusieurs fréquences de signaux d'étiquettes sont affectées en vue d'un étiquetage de porteuses dans chaque domaine, et sont partagées, tour à tour, par ladite une ou lesdites plusieurs porteuses dans ledit chaque domaine ; et dans lequel la règle de répartition dans le temps prédéfinie garantit qu'une fréquence de signal d'étiquette est utilisée pour n'étiqueter qu'une seule porteuse d'un seul noeud de multiplexeur ROADM à la fois.

2. Procédé selon la revendication 1, dans lequel la règle de répartition dans le temps prédéfinie inclut une séquence de partage par répartition dans le temps et un mode de partage par répartition dans le temps,
dans lequel la séquence de partage par répartition dans le temps inclut une séquence de partage par répartition dans le temps parmi les noeuds de multiplexeur ROADM et/ou une séquence de partage par répartition dans le temps parmi des porteuses au sein d'un noeud de multiplexeur ROADM ;
dans lequel le mode de partage par répartition dans le temps inclut un mode de partage de jetons et/ou un mode de partage de tranches de temps ;
dans lequel le mode de partage de jetons inclut : le partage d'un jeton correspondant à une fréquence de signal d'étiquette parmi les noeuds de multiplexeur ROADM et/ou parmi des porteuses au sein d'un noeud de multiplexeur ROADM, par l'intermédiaire d'informations insérées dans un canal de supervision optique, OSC, dans un canal d'étiquettes, dans un canal de données, ou par l'intermédiaire d'une gestion intra-noeud ; et l'envoi du signal d'étiquette sur une porteuse en utilisant la fréquence de signal d'étiquette correspondant au jeton, après que le jeton a été partagé avec la porteuse ;
dans lequel le mode de partage de tranches de temps inclut : l'affectation d'une période de temps fixe pour chaque porteuse au sein de chaque noeud de multiplexeur ROADM dans un domaine, et l'envoi du signal d'étiquette sur une porteuse en utilisant une fréquence de signal d'étiquette partagée dans une période de temps fixe affectée à la porteuse.

3. Procédé selon l'une quelconque des revendications 1 à 2, dans lequel les informations transportées par le signal d'étiquette incluent au moins l'un des éléments suivants : des informations de la porteuse présente, d'un noeud de multiplexeur ROADM émetteur et d'un domaine dans lequel le noeud de multiplexeur ROADM émetteur est situé, ainsi que d'un noeud de multiplexeur ROADM de destination.

4. Système destiné à mettre en oeuvre une étiquette optique, dans lequel le système comporte :
un module de définition configuré de manière à partitionner en domaines un réseau optique selon des noeuds de multiplexeur à insertion-extraction optique reconfigurable, ROADM, et à affecter une ou plusieurs fréquences de signaux d'étiquettes pour chaque domaine ;
un module de partage configuré de manière à partager, dans chaque domaine, une fréquence de signal d'étiquette affectée, parmi des noeuds de multiplexeur ROADM, et/ou parmi des porteuses au sein d'un noeud de multiplexeur ROADM, selon une règle de répartition dans le temps prédéfinie ;
un module d'envoi configuré de manière à envoyer un signal d'étiquette sur une porteuse en utilisant une fréquence de signal d'étiquette partagée ;
dans lequel, le réseau optique est partitionné en de multiples domaines, chacun des multiples domaines comportant un ou plusieurs noeuds de multiplexeur ROADM, chacun dudit un ou desdits plusieurs noeuds de multiplexeur ROADM comportant une ou plusieurs porteuses, chacune de ladite une ou desdites plusieurs porteuses présentant une longueur d'onde,
dans lequel une ou plusieurs fréquences de signaux d'étiquettes sont affectées en vue d'un étiquetage de porteuses dans chaque domaine, en étant partagées, tour à tour, par ladite une ou lesdites plusieurs porteuses dans ledit chaque domaine ; et dans lequel la règle de répartition dans le temps prédéfinie garantit qu'une fréquence de signal d'étiquette est utilisée pour n'étiqueter qu'une seule porteuse d'un seul noeuds de multiplexeur ROADM à la fois.

5. Système selon la revendication 4, dans lequel la règle de répartition dans le temps prédéfinie comporte une séquence de partage par répartition dans le temps et un mode de partage par répartition dans le temps ;
dans lequel la séquence de partage par répartition dans le temps comporte une séquence de partage par répartition dans le temps parmi les noeuds de multiplexeur ROADM et/ou une séquence de partage par répartition dans le temps parmi des porteuses au sein d'un noeud de multiplexeur ROADM ;
dans lequel le mode de partage par répartition dans le temps comporte un mode de partage de jetons et/ou un mode de partage de tranches de temps ;
dans lequel le module de partage est configuré de manière à partager, lors de l'adoption du mode de partage de jetons, un jeton correspondant à une fréquence de signal d'étiquette parmi les noeuds de multiplexeur ROADM et/ou parmi des porteuses au sein d'un noeud de multiplexeur ROADM, par l'intermédiaire d'informations insérées dans un canal de supervision optique, OSC, ou dans un canal d'étiquettes, ou dans un canal de données, ou par l'intermédiaire d'une gestion intra-noeud ; et le module d'envoi est configuré de manière à envoyer le signal d'étiquette sur une porteuse en utilisant la fréquence de signal d'étiquette correspondant au jeton, après que le jeton a été partagé avec la porteuse ;
dans lequel le module de partage est configuré de manière à affecter, lors de l'adoption du mode de partage de tranches de temps, une période de temps fixe pour chaque porteuse au sein de chaque noeud de multiplexeur ROADM dans un domaine ; et le module d'envoi est configuré de manière à envoyer le signal d'étiquette sur une porteuse en utilisant une fréquence de signal d'étiquette partagée dans une période de temps fixe pour la porteuse.
